# EUROPÄISCHE PATENTSCHRIFT

(11) **EP 1 718 161 B1**
(45) Veröffentlichungstag und Bekanntmachung des Hinweises auf die Patenterteilung: **05.09.2007**
(21) Anmeldenummer: 05707131.8
(22) Anmeldetag: 28.01.2005
(51) Int. Cl.: A22C 25/00, A22C 25/16, A22C 25/18

(54) **VORRICHTUNG UND VERFAHREN ZUM AUTOMATISIERTEN VERARBEITEN VON FLEISCH**
DEVICE AND METHOD FOR THE AUTOMATED PROCESSING OF MEAT
DISPOSITIF ET PROCEDE DE TRAITEMENT AUTOMATISE DE VIANDE

(30) Priorität: 27.02.2004 DE 102004010696
(43) Veröffentlichungstag der Anmeldung: 08.11.2006
(73) Patentinhaber: Nordischer Maschinenbau Rud. Baader GmbH + Co. KG, 23560 Lübeck (DE)
(72) Erfinder: NEUMANN, Ralf, 23628 Klempau (DE); RUSKO, Torsten, 23923 Herrenburg (DE); GÜTTE, Ulrich, 23843 Bad Oldesloe (DE)
(74) Vertreter: Wenzel & Kalkoff
(86) Internationale Anmeldenummer: PCT/EP2005/000997
(87) Internationale Veröffentlichungsnummer: WO 2005/082152

(56) Entgegenhaltungen:
- WO-A-01/32369
- WO-A-03/037090
- DE-A1- 2 227 830
- US-A- 5 830 052

## Beschreibung

Die Erfindung betrifft eine Vorrichtung zum automatisierten Verarbeiten von Fleisch, umfassend ein Transportelement zum Transportieren des Fleisches, ein Schneidelement zum Trennen und/oder Trimmen des Fleisches, eine Gegenlage für das Schneidelement sowie wenigstens eine Steuerungs- und/oder Regelungsvorrichtung, die in Wirkverbindung mit dem Schneidelement steht. Des weiteren befaßt sich die Erfindung mit einem Verfahren zum automatisierten Verarbeiten von Fleisch, umfassend die Schritte: Transportieren des Fleisches in den Bereich eines Schneidelements, Auflaufen des Fleisches auf eine Gegenlage, bevor das Fleisch das Schneidelement erreicht, Trennen und/oder Trimmen des Fleisches mittels des Schneidelements, und Abführen des Fleisches.

Solche Vorrichtungen und Verfahren kommen insbesondere in der fleisch- und fischverarbeitenden Industrie zum Einsatz. Im folgenden wird unter Verarbeitung von Fleisch sowohl das Verarbeiten von Säugetieren und Vögeln als auch von Fisch verstanden. Aus dem Stand der Technik sind Vorrichtungen bzw. Verfahren mit den Merkmalen der Oberbegriffe der Ansprüche 1 bzw. 10 bekannt.

Insbesondere bei der Verarbeitung von Fischfilets zur weiteren Verarbeitung, nämlich z.B. bei Trennschnitten zur Portionierung oder bei Trimmschnitten zur Entfernung von Fettstellen, Blutflecken oder dergleichen, wie sie in der WO 03/037090 A1 beschrieben sind, werden die Fischfilets auf dem Transportelement zu den einzelnen Bearbeitungsstationen, u.a. dem Schneidelement, gefördert. Die Fischfilets laufen gegen die bzw. auf die dem Schneidelement in Transportrichtung der Fischfilets vorgelagerte Gegenlage auf und werden dann mittels des Schneidelements, das durch die Steuerungs- und/oder Regelungsvorrichtung in die entsprechende Schneidposition bewegt werden, portioniert und/oder getrimmt.

Derartige Vorrichtungen weisen jedoch den Nachteil auf, daß die Fischfilets frontal an der Gegenlage anstoßen und sich aufstauen. Dies führt zur Unterbrechung der Verarbeitung. Des weiteren können die Fischfilets u.U. auch unter die Gegenlage mit ähnlichen Folgen wie gerade beschrieben, geraten. Gerade weil die üblicherweise noch feuchten Fischfilets eng am Transportelement oder dergleichen anliegen und quasi haften, kann die Gegenlage nicht unter das Fischfilet greifen, um es auf die Gegenlage zu führen.

Es ist daher Aufgabe der vorliegenden Erfindung, eine kompakte Vorrichtung zu schaffen, die ein zuverlässiges Trennen und/oder Trimmen von Fleisch, insbesondere Fischfilets gewährleistet. Des weiteren ist es Aufgabe der vorliegenden Erfindung, ein entsprechendes Verfahren vorzuschlagen.

Diese Aufgabe wird durch eine Vorrichtung mit den eingangs genannten Merkmalen dadurch gelöst, daß im Bereich des Schneidelementes ein Fädelelement angeordnet ist, das gegenüber der Gegenlage in der Transportebene E₁ des Fleisches abgewinkelt ist. Durch das Fädelelement und die winklige Ausbildung bzw. Anordnung wird ein zuverlässiges "Anlupfen" des zu verarbeitenden Fleisches ermöglicht, so daß das Fleisch und insbesondere das Fischfilet sicher und auf die Gegenlage auflaufen kann, wo es durch das Schneielement getrennt und/oder getrimmt wird. Mit dieser Ausbildung des Fädelelementes wird ein stumpfes Auftreffen des Fleisches auf die Gegenlage verhindert. Vielmehr wird das Fleisch durch das seitlich am Fleisch angreifende Fädelelement kontinuierlich und zunehmend auf die Gegenlage "gezogen" bzw. durch das Transportelement geschoben. Durch die Abwinkelung des Fädelelementes trifft das Fleisch mindestens teilweise mit einer seitlichen Komponente auf das Fädelelement, was das Einschieben des Fädelelementes unter das Fleisch vereinfacht. Dabei nutzt man gleichzeitig den Effekt, daß sich die Ränder bzw. mindestens der bauchseitige Rand des Fleisches und besonders auch des Fischfilets leicht nach oben wölbt, so daß das Einführen der Fädelhilfe unter das Fischfilet besonders einfach von der Seite erfolgen kann.

Vorzugsweise ist das Fädelelement integraler Bestandteil der Gegenlage. Dies ermöglicht eine besonders kompakte Ausbildung der Vorrichtung.

In einer weiteren bevorzugten Ausgestaltung der Erfindung ist eine aus Gegenlage und Fädelelement gebildete Einheit schwenkbar ausgebildet. Dadurch wird das seitliche Eingreifen des Fädelelementes noch wirkungsvoller genutzt, da das Fädelelement aus einer Warte- oder Ruheposition in eine Arbeits- oder Funktionsposition bringbar ist.

Des weiteren wird die Aufgabe-durch-ein Verfahren mit den eingangs genannten Schritten dadurch gelöst, daß das Fleisch vor dem Auflaufen auf die Gegenlage durch ein Fädelelement aufgefädelt wird, wobei das Fleisch mindestens teilweise von der Seite angehoben und dann auf die Gegenlage geführt wird. Dadurch wird ein zuverlässiges Führen des Fleisches auf die Gegenlage und in den Wirkbereich des Schneidelements erreicht.

Weitere vorteilhafte und bevorzugte Merkmale und Ausführungsformen sowie Verfahrensschritte ergeben sich aus den Unteransprüchen und der Beschreibung. Eine besonders bevorzugte Ausführungsform sowie das Verfahren werden anhand der beigefügten Zeichnung näher erläutert. In der Zeichnung zeigt:
- Fig. 1: eine schematische Darstellung von Teilen der Vorrichtung, nämlich vom Schneidelement mit Gegenlage und Fädelelement, in Seitenansicht,
- Fig. 2: die Darstellung gemäß Figur 1 in Vorderansicht,
- Fig. 3: eine schematische Darstellung der Anordnung zum Schwenken des Schneidelements mit Gegenlage und Fädelelement,
- Fig. 4: eine schematische Darstellung der Gegenlage mit Fädelelement in Seitenansicht,
- Fig. 5: die Darstellung gemäß Figur 4 in Draufsicht,
- Fig. 6: eine vergrößerte Darstellung der Gegenlage mit Fädelelement in Seitenansicht,
- Fig. 7: die Darstellung gemäß Figur 6 in Draufsicht, und
- Fig. 8: eine Schnittdarstellung gemäß Schnitt A-A in Figur 7.

Die beschriebene Vorrichtung 10 ist universell einsetzbar, und zwar in allen Anlagen und Vorrichtungen, die zur Verarbeitung von Fleisch geeignet sind. Besonders bevorzugt ist der Einsatz der Vorrichtung 10 in einer Gesamtvorrichtung zur Verarbeitung von Fleisch, wie sie z.B. in der DE 199 81 456.2 beschrieben ist.

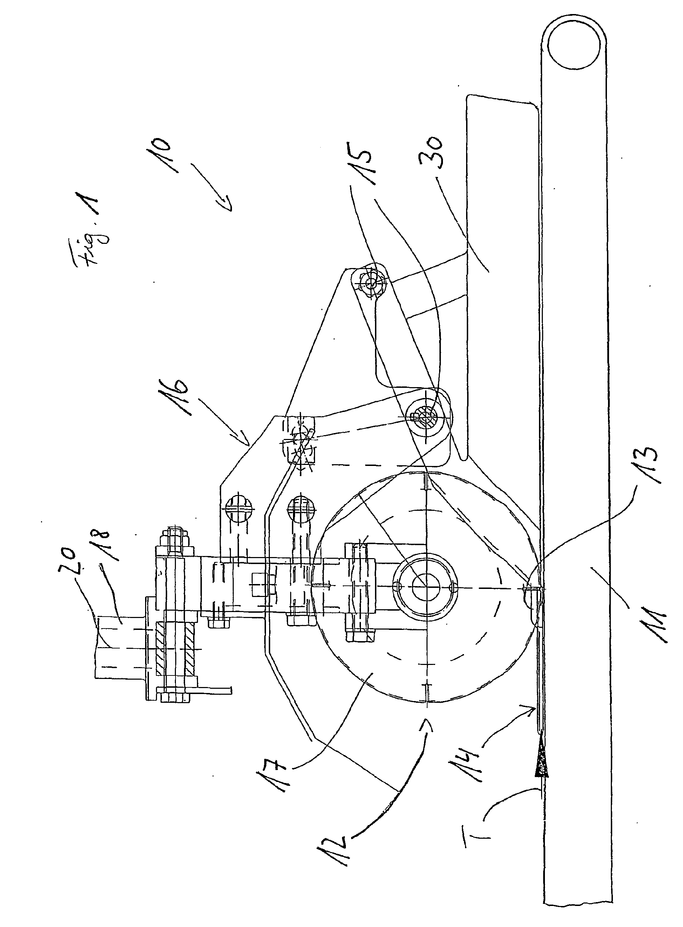

Aus der Figur 1 geht eine Vorrichtung 10 bzw. Teile derselben hervor, die im wesentlichen aus einem Transportelement 11 zum Transportieren des Fleisches durch die Vorrichtung 10 in Transportrichtung (gemäß Pfeil T) von einer vorgeschalteten (nicht dargestellten) Verarbeitungs- oder Eingabestation zu einer nachgeordneten (ebenfalls nicht dargestellten) Verarbeitungs- oder Ausgabestation, einem Schneidelement 12 zum Trennen und/oder Trimmen des Fleisches, einer Gegenlage 13 für das Schneidelement 12 sowie wenigstens einer (nicht gezeigten) Steuerungs- und/oder Regelungsvorrichtung besteht, wobei die Steuerungs- und/oder Regelungsvorrichtung in Wirkverbindung mit dem Schneidelement 12 steht. Solche Vorrichtungen 10 dienen zum Verarbeiten von Fleisch jeglicher Art, wobei sich die Beschreibung im folgenden beispielhaft auf die Verarbeitung von Fisch bzw. Fischfilets bezieht.

Die Gegenlage 13 verläuft etwa parallel zur Transportebene E₁ (aufgespannt durch X- und Y-Koordinaten wie in Figur 7) der Fischfilets und ist im Bereich des Schneidelements 12 angeordnet. Zusätzlich ist im Bereich des Schneidelements 12, das als Messer, Kreismesser oder in anderer üblicher Form ausgebildet sein kann, ein Fädelelement 14 angeordnet. Das Fädelelement 14 ist fest mit der Gegenlage 13 verbunden und in der gezeigten Ausführungsform integraler Bestandteil derselben. Mit anderen Worten bilden die Gegenlage 13 und das Fädelelement 14 eine Einheit, die dem Schneidelement 12 zugeordnet und insbesondere vorgeschaltet ist. Die Einheit aus Gegenlage 13 und Fädelelement 14 kann fest mit dem Schneidelement 12 verbunden sein, derart, daß Bewegungen des Schneidelements 12 in linearer und/oder nichtlinearer Richtung synchron ausführbar sind. Alternativ kann die genannte Einheit auch relativ zum Schneidelement 12 bewegbar ausgebildet sein.

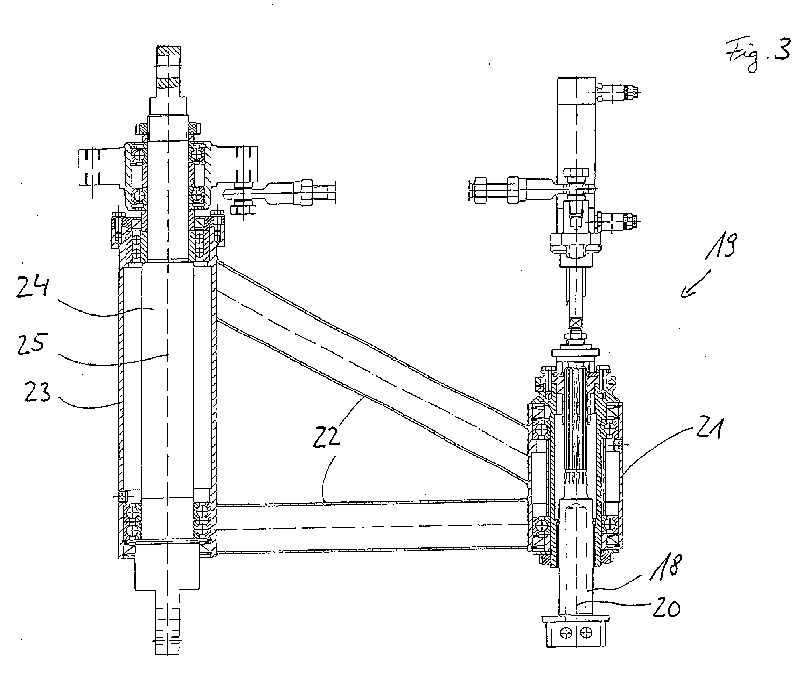

In der gezeigten Ausführungsform (siehe insbesondere Figur 1) ist die Einheit aus Gegenlage 13 und Fädelelement 14 lösbar, vorzugsweise mit Schrauben 15 an einem Trägerelement 16 befestigt, an dem auch das Schneidelement 12 angeordnet ist. Das in diesem Beispiel als Kreismesser 17 ausgebildete Schneidelement 12 ist rotierend antreibbar an dem Trägerelement 16 angeordnet. Das Trägerelement 16 wiederum ist an einem Wellenelement 18 angeordnet, das Bestandteil einer (insbesondere aus Figur 3 ersichtlichen) Schwenkanordnung 19 ist. Das Wellenelement 18 weist eine Drehachse 20 auf, um die es - und damit auch das Trägerelement 16 - schwenkbar ist. Das Wellenelement 18 selbst ist innerhalb einer Hülse 21 gelagert, die ihrerseits starr mittels Streben 22 oder dergleichen mit einer weiteren Hülse 23 verbunden ist. Die Hülse 23 ist schwenkbar auf einer Achse 24 gelagert, derart, daß die Hülse 23 schwenkbar um eine Drehachse 25 antreibbar, wobei die Rotations- bzw. Schwenkbewegungen um die Drehachsen 25 und 20 auch überlagerbar sind. Zusätzlich kann die Schwenkanordnung 19 oder auch Teile derselben in linearer Richtung, nämlich auf- und abbewegbar und/oder in oder entgegen der Transportrichtung T, bewegbar ausgebildet sein.

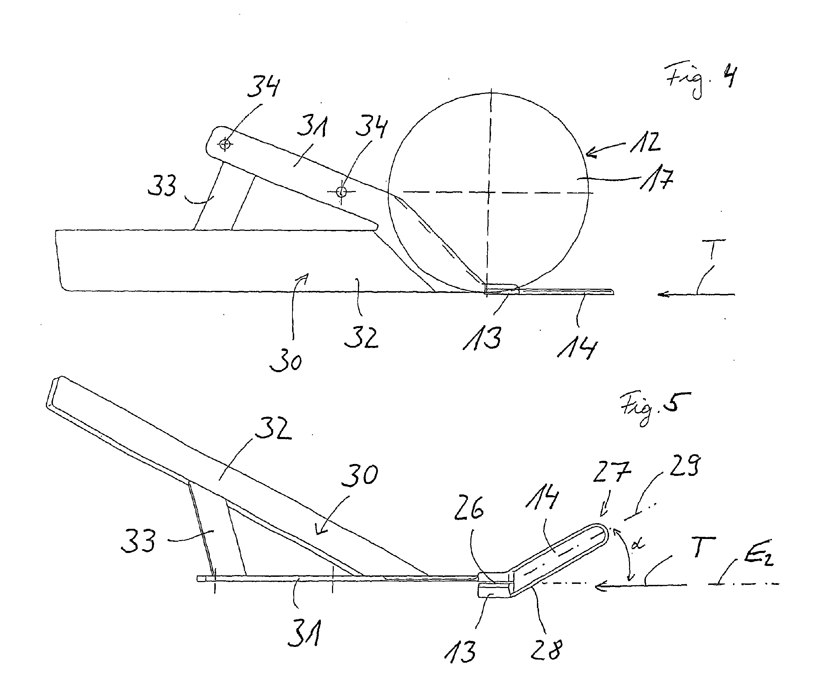

Details der Einheit aus Gegenlage 13 und Fädelelement 14 ergeben sich insbesondere aus den Figuren 4 bis 8. Die Gegenlage 13 ist ein flaches, plattenartiges Element, das einen Schlitz 26 aufweist, wobei die Breite des Schlitzes 26 geringfügig größer als die Breite des Kreismessers 17 ist. Gegenlage 13 und Kreismesser 17 sind derart zueinander angeordnet, daß das Kreismesser 17 zwar in den Schlitz 26 eintaucht, allerdings nicht auf der dem Transportelement zugewandten Seite austritt. Die Gegenlage 13 ist auf der dem Fischfilet zugewandten Seite des Schlitzes 26 zur Mitte hin abfallend ausgebildet (siehe insbesondere Figur 8).

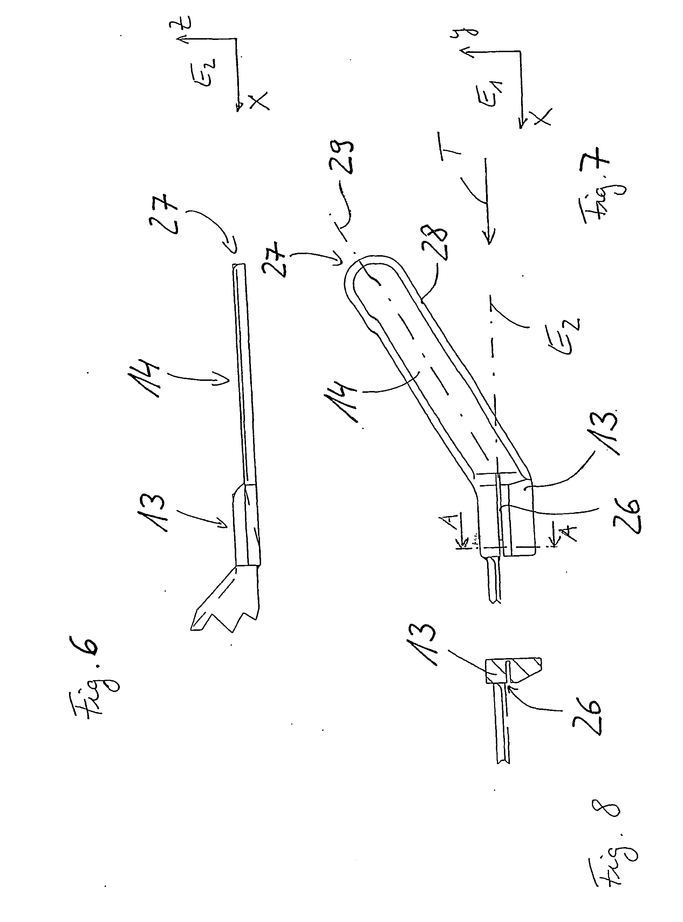

In Verlängerung der Gegenlage 13 erstreckt sich entgegen der Transportrichtung T das Fädelelement 14. Das Fädelelement 14 ist ebenfalls plattenartig in der Form eines Spatels oder dergleichen ausgebildet. Wie sich besonders aus Figur 6 ergibt, ist die Stärke des Materials der Gegenlage 13 größer als die Stärke des Materials des Fädelelementes 14. Gegenlage 13 und Fädelelement 14 sind einstückig aus demselben Material hergestellt, nämlich vorzugsweise aus Edelstahl.

Das Fädelelement 14 ist an seinem freien Ende 27 abgerundet ausgebildet und zumindest auf der dem Fischfilet zugewandten Seite, vorzugsweise aber umlaufend mit einer Fase 28 versehen ausgebildet. Das Fädelelement 14 kann mit seiner Mittelachse 29 derart ausgerichtet sein, daß die Mittelachse 29 parallel zu der durch das Kreismesser 17 aufgespannten Schneidebene E₂ (aufgespannt durch die X- und Z-Koordinaten wie in Figur 6) oder in einem Winkel α zu derselben verläuft. Bevorzugt ist eine Ausrichtung mit einem Winkel von etwa 20-40°. Andere Winkelgrößen sind jedoch ebenfalls möglich. In der Figur 5 z.B. beträgt der Winkel α etwa 30°, wobei das Fädelelement 14 nach außen gerichtet ist.

Auf der dem Fädelelement 14 entgegengesetzten Seite der Gegenlage 13 ist ein Abweiserelement 30 angeordnet, das ebenfalls ein- oder mehrstückig mit der Einheit aus Gegenlage 13 und Fädelelement 14 ausgebildet ist. Das Abweiserelement 30 umfaßt ein Wandelement 31, das parallel zur Schneidebene E₂ verläuft, und ein sich diagonal im Raum erstreckendes Leitblech 32, wobei Leitblech 32 und Wandelement 31 durch einen Steg 33 miteinander verbunden bzw. stabilisiert sind. Im Wandelement 31 befinden sich Bohrungen 34 zur lösbaren Befestigung an dem Trägerelement 16 bzw. der Schwenkanordnung 19. Das Leitblech 32 kann ein- oder auch mehrteilig ausgebildet sein. Bevorzugt ist ein mindestens zweiteiliges Leitblech 32, das einen festen, mit der Gegenlage13 verbundenen ersten Abschnitt und einen zweiten relativ zum ersten Abschnitt beweglichen zweiten Abschnitt aufweist. Der zweite Abschnitt ist in vertikaler Richtung durch Schwenkbewegung und/oder lineare Bewegung einstellbar, derart, daß ein Spalt zwischen der Unterkante des Leitblechs 32 und der Oberfläche des Transportelementes 11 veränderbar ist.

Im folgenden wird noch das Verfahrensprinzip anhand der Figuren beispielhaft für Fischfilets näher erläutert:

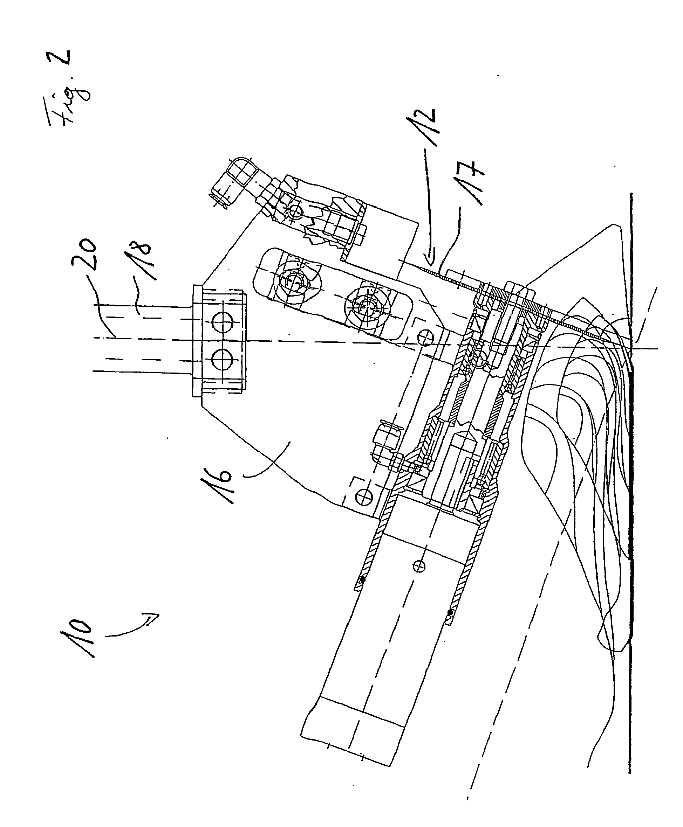

Die Fischfilets laufen in Transportrichtung T in die Vorrichtung ein. Kurz bevor das Fischfilet in den Bereich der Vorrichtung 10 und genauer der Einheit aus Gegenlage 13 und Fädelelement 14 gelangt, ist die Schwenkanordnung 19 in einer Ruhe- bzw. Warteposition geschwenkt. Das bedeutet, daß Gegenlage 13 und Fädelelement 14 außerhalb des Transportbereichs des Fischfilets stehen. Wenn das Fischfilet weiter in Transportrichtung T gefördert wird, schwenkt die Gegenlage 13 mit dem Fädelelement 14 nach innen, und zwar kurz bevor das Fischfilet das Schneidelement 12 erreicht hat. Durch das Einschwenken des Fädelelementes 14 nach innen auf das Fischfilet zu, wird dieses seitlich auf die Gegenlage 13 "gehoben". Hierbei spielt der Effekt eine besondere Rolle, daß jedes Fischfilet auf einer nach außen, in Richtung des Fädelelementes weisenden Bauch- oder Rückenseite durch die Hautverbindung leicht nach oben von der Transportebene weg gewölbt ist (siehe insbesondere Figur 2), so daß das Fädelelement 14 unter das Fischfilet greifen kann. Durch die Schrägstellung des Fädelelementes 14 können jedoch auch vollständig plan auf dem Transportelement 11 aufliegende Fischfilets aufgefädelt werden. Durch den kontinuierlichen Antrieb des Transportelementes 11 wird das Fischfilet vom Fädelelement 14 aufgefädelt, auf die Gegenlage 13 geführt und dort mittels des Kreismessers 17 getrimmt und/oder getrennt. Wird beispielsweise ein sich am Bauchrand befindlicher Fettstreifen vom Fischfilet abgetrennt, wird dieser Fettstreifen durch das Abweiserelement 30 und genauer durch das Leitblech 32 aus dem Verarbeitungsprozeß seitlich ausgeschleust.

Das Verfahren kann auch ohne die Schwenkbewegung erfolgen, indem das Fischfilet auf das abgewinkelt ausgebildete Fädelelement 14 aufläuft- Durch die Winkelstellung des Fädelelementes 14 wird sichergestellt, daß es mindestens teilweise seitlich am Fischfilet angreift, so daß das Fischfilet zuverlässig zum Trennen und/oder Trimmen auf der Gegenlage 13 aufliegt.

## Patentansprüche

1. Vorrichtung zum automatisierten Verarbeiten von Fleisch, umfassend ein Transportelement (11) zum Transportieren des Fleisches, ein Schneidelement (12) zum Trennen und/oder Trimmen des Fleisches, eine Gegenlage (13) für das Schneidelement (12) sowie wenigstens eine Steuerungs- und/oder Regelungsvorrichtung, die in Wirkverbindung mit dem Schneidelement (12) steht, **dadurch gekennzeichnet, daß** im Bereich des Schneidelements (12) ein Fädelelement (14) angeordnet ist, das gegenüber der Gegenlage (13) in der Transportebene E₁ des Fleisches abgewinkelt ist.

2. Vorrichtung Anspruch 1, **dadurch gekennzeichnet, daß** das Fädelelement (14) integraler Bestandteil der Gegenlage (13) ist.

3. Vorrichtung nach Anspruch 1 oder 2, **dadurch gekennzeichnet, daß** das Fädelelement (14) in Verlängerung der Gegenlage (13) ausgebildet ist.

4. Vorrichtung nach einem der Ansprüche 1 bis 3, **dadurch gekennzeichnet, daß** das Fädelelement (14) ein spatelartiges Plattenelement ist und eine längliche und am freien Ende (27) abgerundete Form aufweist.

5. Vorrichtung nach Anspruch 4, **dadurch gekennzeichnet, daß** das Plattenelement zumindest an der dem Fleisch zugewandten Seite angefast ist.

6. Vorrichtung nach einem der Ansprüche 1 bis 5, **dadurch gekennzeichnet, daß** eine aus Gegenlage (13) und Fädelelement (14) bestehende Einheit schwenkbar ausgebildet ist.

7. Vorrichtung nach Anspruch 6, **dadurch gekennzeichnet, daß** die Einheit aus Gegenlage (13) und Fädelelement (14) um mindestens eine Drehachse (20, 25) schwenkbar ist.

8. Vorrichtung nach Anspruch 6 oder 7, **dadurch gekennzeichnet, daß** die Einheit aus Gegenlage (13) und Fädelelement (14) in linearer Richtung bewegbar ist.

9. Vorrichtung nach einem der Ansprüche 1 bis 8, **dadurch gekennzeichnet, daß** auf der dem Fädelelement (14) entgegengesetzten Seite der Gegenlage (13) ein Abweiserelement (30) angeordnet ist.

10. Verfahren zum automatisierten Verarbeiten von Fleisch, umfassend die Schritte:
- Transportieren des Fleisches in den Bereich eines Schneidelements (12),
- Auflaufen des Fleisches auf eine Gegenlage (13) bevor das Fleisch das Schneidelement (12) erreicht,
- Trennen und/oder Trimmen des Fleisches mittels des Schneidelements (12), und
- Abführen des Fleisches,
**dadurch gekennzeichnet, daß** das Fleisch vor dem Auflaufen auf die Gegenlage (13) durch ein Fädelelement (14) aufgefädelt wird, wobei das Fleisch mindestens teilweise von der Seite angehoben und dann auf die Gegenlage (13) geführt wird.

## Claims

1. Apparatus for the automated processing of meat, comprising a transport element (11) for transporting the meat, a cutting element (12) for cutting and/or trimming the meat, a counter-surface (13) for the cutting element (12) and at least one control and/or regulating apparatus, which is in functional connection with the cutting element (12), **characterised in that** arranged in the area of the cutting element (12) is a threading element (14), which is bent in respect of the counter-surface (13) in the transport plane E₁ of the meat.

2. Apparatus according to claim 1, **characterised in that** the threading element (14) is an integral component of the counter-surface (13).

3. Apparatus according to claim 1 or 2, **characterised in that** the threading element (14) is constructed as an extension of the counter-surface (13).

4. Apparatus according to one of claims 1 to 3, **characterised in that** the threading element (14) is a spatula-like plate element and has an elongated shape, rounded at the free end (27).

5. Apparatus according to claim 4, **characterised in that** the plate element is chamfered at least on the side facing the meat.

6. Apparatus according to one of claims 1 to 5, **characterised in that** a unit consisting of counter-surface (13) and threading element (14) is constructed as swivellable.

7. Apparatus according to claim 6, **characterised in that** the unit consisting of counter-surface (13) and threading element (14) is swivellable about at least one rotational axis (20, 25).

8. Apparatus according to claim 6 or 7, **characterised in that** the unit consisting of counter-surface (13) and threading element (14) is movable in a linear direction.

9. Apparatus according to one of claims 1 to 8, **characterised in that** a deflector element (30) is arranged on the side of the counter-surface (13) opposite the threading element (14).

10. Method for the automated processing of meat, comprising the steps:
- transporting the meat into the area of a cutting element (12),
- running the meat up against a counter-surface (13) before the meat reaches the cutting element (12),
- cutting and/or trimming the meat by means of the cutting element (12) and
- removing the meat,
**characterised in that** the meat is threaded by a threading element (14) before running up against the counter-surface (13), wherein the meat is at least partially lifted from the side and then guided on to the counter-surface (13).

## Revendications

1. Dispositif de traitement automatique de viande, lequel dispositif comporte un élément de transport (11) destiné à transporter la viande, un élément de coupe (12) destiné à couper et/ou conditionner la viande, une butée (13) destinée à l'élément de coupe (12) ainsi qu'au moins un dispositif de commande et/ou de régulation qui est en liaison active avec l'élément de coupe (12), **caractérisé en ce qu'**un élément d'enfilage (14) est disposé dans la région de l'élément de coupe (12) et forme un angle par rapport à la butée (13) dans le plan de transport E de la viande.

2. Dispositif selon la revendication 1, **caractérisé en ce que** l'élément d'enfilage (14) fait partie intégrante de la butée (13).

3. Dispositif selon la revendication 1 ou 2, **caractérisé en ce que** l'élément d'enfilage (14) est conformé dans le prolongement de la butée (13).

4. Dispositif selon l'une des revendications 1 à 3, **caractérisé en ce que** l'élément d'enfilage (14) est un élément de plaque en forme de spatule et a une forme allongée et arrondie à l'extrémité libre (27).

5. Dispositif selon la revendication 4, **caractérisé en ce que** l'élément de plaque est biseauté au moins du côté de la viande.

6. Dispositif selon l'une des revendications 1 à 5, **caractérisé en ce qu'**une unité, constituée de la butée (13) et de l'élément d'enfilage (14), est conformée de façon à pouvoir pivoter.

7. Dispositif selon la revendication 6, **caractérisé en ce que** l'unité, constituée de la butée (13) et de l'élément d'enfilage (14), est apte à pivoter autour d'au moins un axe de rotation (20, 25).

8. Dispositif selon la revendication 6 ou 7, **caractérisé en ce que** l'unité, constituée de la butée (13) et de l'élément d'enfilage (14), est apte à se déplacer dans une direction rectiligne.

9. Dispositif selon l'une des revendications 1 à 8, **caractérisé en ce qu'**un élément de déflexion (30) est placé du côté de la butée (13) qui est opposé à l'élément d'enfilage (14).

10. Procédé de traitement automatisé de viande, lequel procédé comporte les étapes consistant à :
- amener la viande dans la région d'un élément de coupe (12),
- faire porter la viande contre une butée (13) avant que la viande n'atteigne l'élément de coupe (12),
- séparer et/ou conditionner la viande au moyen de l'élément de coupe (12), et
- emporter la viande,
**caractérisé en ce que** la viande est enfilée sur un élément d'enfilage (14) avant de porter contre la butée (13), la viande étant soulevée au moins partiellement sur le côté puis amenée contre la butée (13).
